Europäisches Patentamt

European Patent Office

Office européen des brevets

(11) Veröffentlichungsnummer: **0 361 104**

**A2**

## EUROPÄISCHE PATENTANMELDUNG

(21) Anmeldenummer: **89115811.5**

(22) Anmeldetag: **28.08.89**

(51) Int. Cl.5: **B60Q 1/50**

(30) Priorität: **28.09.88 DE 8812241 U**

(43) Veröffentlichungstag der Anmeldung:
**04.04.90 Patentblatt 90/14**

(84) Benannte Vertragsstaaten:
**AT BE CH DE ES FR GB GR IT LI LU NL SE**

(71) Anmelder: **PICHLER-KUNSTSTOFFTECHNIK GMBH**
**Lauterbachstrasse 19**
**D-8330 Eggenfelden(DE)**

(72) Erfinder: **Pichler, Edmund**
**Lauterbachstrasse 19**
**D-8330 Eggenfelden(DE)**

(74) Vertreter: **Hanke, Hilmar et al**
**Patentanwälte, Dipl.-Ing. Hans Köster**
**Dipl.-Ing., Dipl. Wirtsch, Hilmar Hanke**
**Leopoldstrasse 77**
**D-8000 München 40(DE)**

(54) **Anordnung von Kraftfahrzeug - Aussenteilen.**

(57) Bei Personenkraftfahrzeugen ist es bekannt, beispielsweise Heckflügel, Heck- oder Frontblenden bzw. -schürzen oder Dachspoiler vorzusehen, um das moderne optische Erscheinungsbild des Fahrzeugs zu verbessern sowie technische Vorteile, z.B. Verringerung des $c_w$-Wertes zu erzielen.

Erfindungsgemäß wird vorgeschlagen, ein ohnehin am Fahrzeug vorhandenes Teil oder Zubehör des Fahrzeugs (Heckspoiler oder -flügel) (2), Dachspoiler oder -flügel, Stoßstangenkörper, Kennzeichenblende, Kühlergrill, Karosserie-Außenteil, Karosserie-Aussparung) für die Anbringung einer elektronischen Textanzeigevorrichtung (1) zu verwenden, deren Bedienungselement vorteilhafterweise im Fahrzeuginnenraum angeordnet ist.

FIG.1

## Anordung an Kraftfahrzeug-Außenteilen

Die Erfindung betrifft eine Anordnung an Kraftfahrzeug-Außenteilen, insbesondere bei Personenkraftwagen.

Es ist bekannt, bei Personenkraftfahrzeugen beispielsweise Heckflügel, Heck- oder Frontblenden bzw. -schürzen oder Dachspoiler vorzusehen, um das moderne optische Erscheinungsbild des Fahrzeugs zu verbessern sowie technische Vorteile zu erzielen, wie beispielsweise Verringerung des $c_w$-Wertes, Verringerung der Verschmutzung der Heckscheibe und des gesamten Heckbereichs insgesamt, Erhöhung des Abtriebs einhergehend mit einer Vergrößerung der Traktion bzw. Anzugskraft bei höherer Fahrzeuggeschwindigkeit, etc..

Aufgabe der Erfindung ist die Schaffung einer Anordnung an Kraftfahrzeug-Außenteilen, die einfach aufgebaut ist und mit Hilfe einfacher Mittel für eine Zusatzfunktion ohnehin am Kraftfahrzeug vorhandener Außenteile sorgt.

Gelöst wird die der Erfindung zugrundeliegende Aufgabe dadurch, daß im oder am Kraftfahrzeug-Außenteil eine elektronische Textanzeigevorrichtung ausgebildet ist.

Das Kraftfahrzeug-Außenteil ist zweckmäßigerweise ein auf dem Fahrzeugheck angeordneter Heckspoiler oder -flügel, Dachspoiler oder -flügel, der vordere oder der hintere Stoßstangenkörper, eine Kennzeichenblende, der Kühlergrill oder ein Karosserie-Außenteil bzw. eine Karosserieaussparung, in der die elektrische Textanzeigevorrichtung integriert ausgebildet sein kann.

Durch die Erfindung wird mithin ein ohnehin am Fahrzeug vorhandenes Teil oder Zubehör des Fahrzeugs als Basis für eine Anbringung einer elektrischen Textanzeigevorrichtung verwendet, deren Bedienungselement vorteilhafterweise im Fahrzeuginnenraum angeordnet ist, insbesondere am oder im Armaturenbereich des Fahrzeugs in greifbarer Nähe des Fahrers oder Beifahrers. Gegebenenfalls kann das Bedienungselement auch im Fahrzeugfond in einer festen Anordnung vorgesehen sein oder aber auch in einer flexiblen Anordnung im Fahrzeuginnenraum, beispielsweise unter Zwischenschaltung eines Steckkabels *. Durch die Erfindung können mithin Informationen an andere Verkehrsteilnehmer auf einfache Weise übermittelt werden, und zwar in einer kompakten strömungsgünstigen Anordnung, die deutlich sichtbar für andere Verkehrsteilnehmer ist. Die elektronische Textanzeigevorrichtung erstreckt sich zweckmäßigerweise über einen Großteil der oder praktisch über die gesamte Fahrzeugbreite. Die Anzeigenlänge ist insgesamt auf die Einbaulage abgestimmt und die Anzeigenhöhe so bemessen, daß das alphanumerische Schriftfeld auf eine ausreichende Distanz hin gut lesbar ist. Gleichwohl beeinträchtigt die elektronische Textanzeigevorrichtung nicht das optische Erscheinungsbild des Fahrzeugs, da diese geschickt am Fahrzeugäußeren integriert ist. Bekannte Außenanzeigen an Kraftfahrzeugen sind vergleichsweise strömungsungünstig an zusätzlich am Fahrzeug vorzusehenden Halterungen angebracht, beispielsweise an Dachträgern mit der festen Aufschrift TAXI.

Die elektronische Textanzeigevorrichtung kann mit einem Textspeicher ausgerüstet sein, der verschiedene Texte speichert, die durch eine Bedienungsperson wahlweise abrufbar und am Fahrzeugäußeren anzeigbar sind, beispielsweise ABSTAND HALTEN oder STAU oder bei Einsatzfahrzeugen POLIZEI, BITTE ANHALTEN oder KRANKENTRANSPORT. Ein derartiger Textspeicher ist vorzugsweise ein Festspeicher.

Besonders vorteilhaft ist es, wenn die elektronische Textanzeigevorrichtung eine Laufbandanzeige aufweist, die einen laufenden bzw. fließenden Text einem dritten Verkehrsteilnehmer mitteilt, wodurch die Informationskapazität gesteigert wird.

Eine große Flexibilität ergibt sich, wenn in zweckmäßiger Weiterbildung der Erfindung eine Tastatureingabe zum Einspeichern eines frei programmierbaren Textes vorgesehen ist. Der frei programmierte Text kann dann stehend oder in Form einer Laufbandanzeige den anderen Verkehrsteilnehmern mitgeteilt werden.

Die elektronische Textanzeigevorrichtung ist zweckmäßigerweise eine selbstleuchtende oder durch eine Fremdlichtquelle erleuchtete Anzeige und mit Hilfe einer elektrischen Steckverbindung an das elektrische Netz des Kraftfahrzeugs anschließbar.

Die Erfindung wird nachfolgend anhand von Ausführungsbeispielen unter Bezugnahme auf die beigefügte Zeichnung näher erläutert; es zeigen:

Fig. 1 eine elektronische Textanzeigevorrichtung in einem Heckflügel eines Personenkraftfahrzeugs in perspektivischer schematischer Darstellung,

Fig. 2 eine Textanzeigevorrichtung ähnlich der Fig. 1 in einer hinteren Stoßstange, und

Fig. 3 eine Textanzeigevorrichtung ähnlich den Fig. 1 und 2 im vorderen Kühlergrill.

Gemäß Zeichnung ist eine elektronische Textanzeigevorrichtung 1 vorgesehen, die an bzw. in

* oder durch eine drahtlose Verbindung

einem ohnehin am Kraftfahrzeug vorgesehenen Außenteil deutlich sichtbar zur Übermittlung von Informationen an andere Verkehrsteilnehmer vorgesehen ist. Gemäß Ausführungsbeispiel befindet sich der sichtbare Teil der elektronischen Textanzeigevorrichtung 1 in einem hinteren Heckflügel 2, der integriert mit der Heckpartie des Kraftfahrzeugs ausgebildet oder auf einem Heck eines Personenkraftfahrzeuges nachträglich montiert worden ist. Die elektronische Textanzeigevorrichtung 1 umfaßt einen (nicht veranschaulichten) Textspeicher sowie ein Bedienungselement im Armaturenbereich des Fahrzeuginnenraums mit einer Tastatureingabe zum Einspeichern eines frei programmierten Textes. Die Programmierung kann für eine statische Textanzeige oder für eine laufende Textanzeige mit oder ohne Bild ausgelegt sein.

Die eigentliche Anzeige erfolgt über Leuchtanzeigen in an sich bekannter Bauweise.

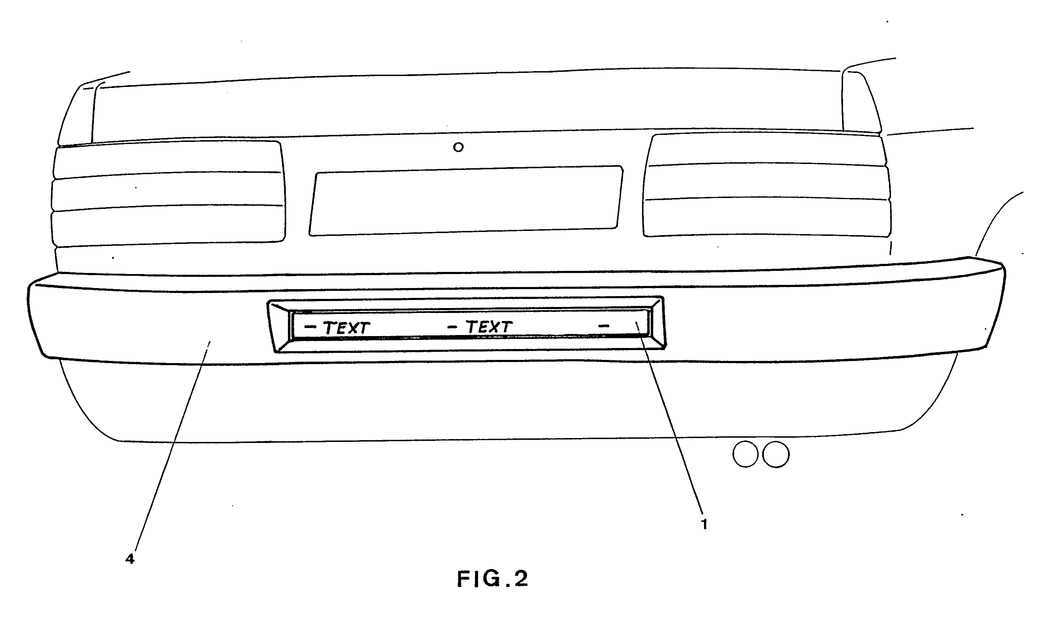

Gemäß Ausführungsbeispiel nach Fig. 2 ist der für dritte Verkehrsteilnehmer sichtbare Teil der elektronischen Textanzeigevorrichtung 1 zentral in einem hinteren Stoßstangenkörper 4 des Personenkraftfahrzeuges angeordnet. Die Bedienungselemente befinden sich ähnlich dem vorgenannten Ausführungsbeispiel im Fahrzeuginnenraum. In der Stoßstange können Wasserspritzdüsen integriert sein, um durch Spritzwasser Schmutzpartikel von der Anzeige fernzuhalten. Gegebenenfalls kann auch eine Wischeinrichtung vorgesehen sein, ähnlich einer Wisch-Wasch-Einrichtung von Scheinwerfern.

Die Textanzeigevorrichtung 1 kann auch an andere Verkehrsteilnehmer Bildbestandteile oder Symbole informativ übermitteln, beispielsweise einen langgestreckten Pfeil nach rechts oder nach links in Unterstützung eines Fahrtrichtungsanzeigers.

In alternativer Ausgestaltung kann der sichtbare Teil der elektronischen Textanzeigevorrichtung 1 auch in einer Kennzeichenblende 6 eines Fahrzeugs vorgesehen sein, insbesondere auf dem Umfang, gegebenenfalls mit umlaufender Textanzeige.

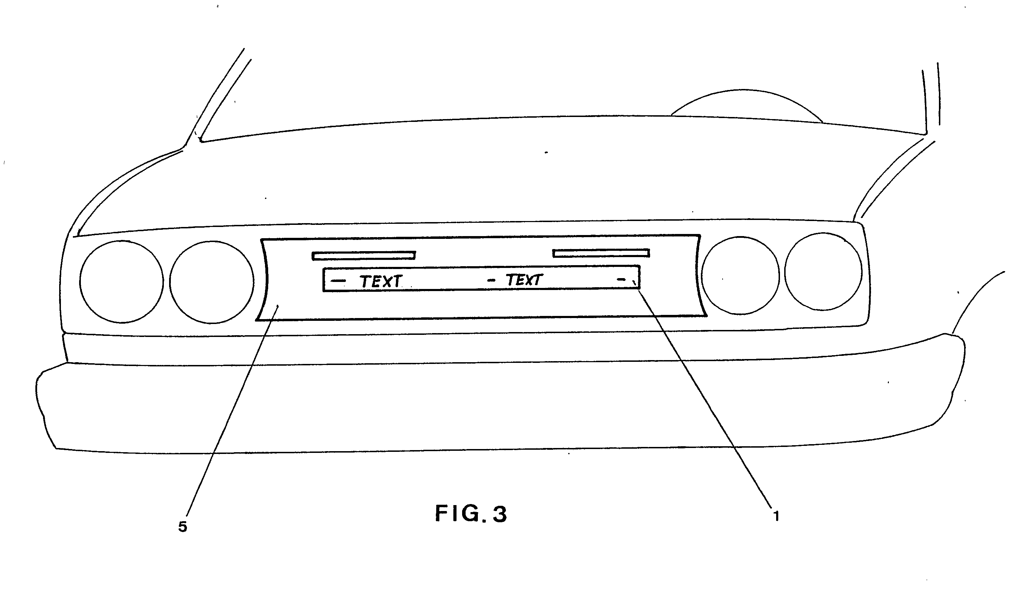

Das Ausführungsbeispiel nach Fig. 3 sieht den für dritte Verkehrsteilnehmer sichtbaren Teil der Textanzeigevorrichtung 1 in einem vorderen Kühlergrill 5 zwischen den vorderen Scheinwerfern vor. In diesem Fall läßt sich eine mögliche Wisch-Wasch-Einrichtung für die Textanzeige mit der Scheinwerfer-Wisch-Wasch-Anlage mit Hilfe einfacher Mittel integrieren.

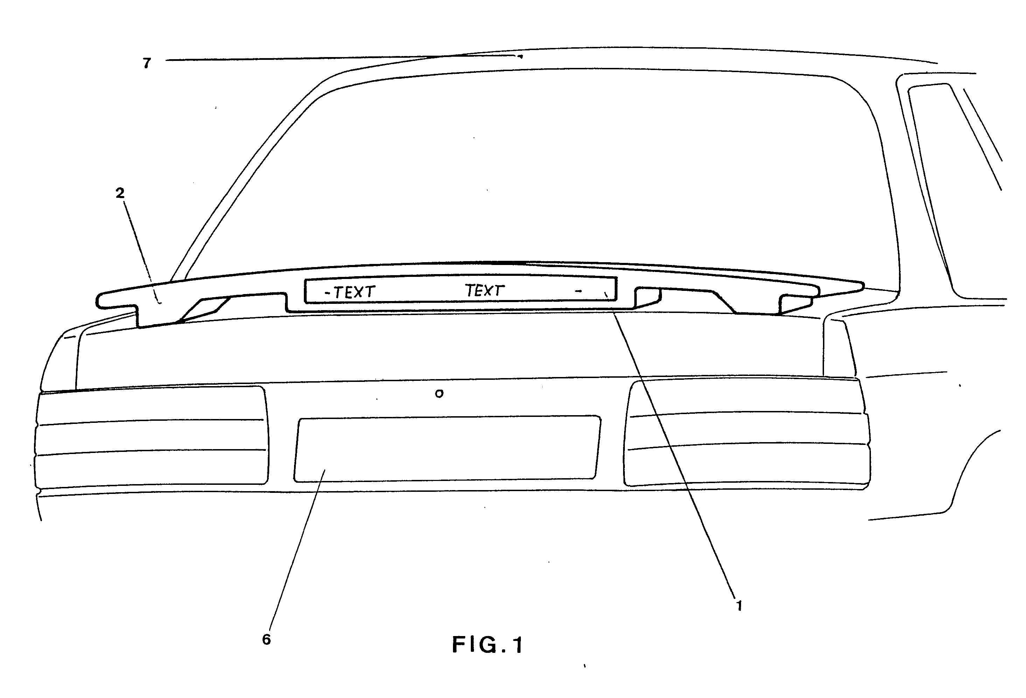

Die elektronische Textanzeigevorrichtung 1 kann auch auf dem hinteren Teil eines stromlinienförmigen Dachspoilers des Fahrzeugdachs 7 vorgesehen sein, ähnlich dem Ausführungsbeispiel nach Fig. 1. Ein derartiger Dachspoiler sorgt vorzugsweise für eine Verringerung des Luftwiderstands bei gleichzeitiger Schmutzfreihaltung der Heckscheibe.

Alle in der Beschreibung erwähnten und oder in der Zeichnung dargestellten neuen Merkmale allein oder in sinnvoller Kombination sind erfindungswesentlich, auch soweit sie in den Ansprüchen nicht ausdrücklich beansprucht sind.

## Ansprüche

1. Anordnung an Kraftfahrzeug-Außenteilen, dadurch gekennzeichnet, daß im oder am Kraftfahrzeug-Außenteil eine elektronische Textanzeigevorrichtung (1) ausgebildet ist, wobei das Kraftfahrzeug-Außenteil ein auf dem Heck des Fahrzeugs angeordneter Heckspoiler oder Heckflügel, ein auf dem Fahrzeugdach (7) angeordneter Dachspoiler oder Dachflügel, der Stoßstangenkörper (4) des Fahrzeugs, eine Kennzeichenblende (6), der Kühlergrill (5) des Fahrzeugs, ein Karosserie-Außenteil oder eine Karosserieaussparung ist, in der die elektronische Textanzeigevorrichtung (1) integriert ausgebildet ist.

2. Anordnung nach Anspruch 1, dadurch gekennzeichnet, daß die elektronische Textanzeigevorrichtung (1) sich über einen Großteil der oder praktisch über die gesamte Fahrzeugbreite erstreckt.

3. Anordnung nach Anspruch 1 oder 2, dadurch gekennzeichnet, daß die elektronische Textanzeigevorrichtung (1) ein Bedienungselement aufweist, das im Fahrzeuginnenraum angeordnet ist.

4. Anordnung nach Anspruch 3, dadurch gekennzeichnet, daß das Bedienungselement am oder im Armaturenbereich des Fahrzeugs angeordnet ist.

5. Anordnung nach einem der Ansprüche 1 bis 4, dadurch gekennzeichnet, daß die elektronische Textanzeigevorrichtung (1) einen Textspeicher aufweist.

6. Anordnung nach einem der Ansprüche 1 bis 5, dadurch gekennzeichnet, daß die elektronische Textanzeigevorrichtung (1) eine Tastatureingabe zum Einspeichern eines frei programmierten Textes aufweist.

7. Anordnung nach einem der Ansprüche 1 bis 6, dadurch gekennzeichnet, daß die elektronische Textanzeigevorrichtung (1) eine selbstleuchtende Anzeige aufweist.

8. Anordnung nach einem der Ansprüche 1 bis 7, dadurch gekennzeichnet, daß die elektronische Textanzeigevorrichtung (1) eine durch eine Fremdlichtquelle erleuchtete Anzeige aufweist.

9. Anordnung nach einem der Ansprüche 1 bis 8,
dadurch gekennzeichnet,
daß die elektronische Textanzeigevorrichtung (1) eine Wisch-Wasch-Einrichtung aufweist.

10. Anordnung nach einem der Ansprüche 3 bis 9,
dadurch gekennzeichnet,
daß das Bedienungselement drahtlos mit der eigentlichen Textanzeigevorrichtung verbunden ist.

11. Anordnung nach einem der Ansprüche 1 bis 10,
dadurch gekennzeichnet,
daß die Textanzeigevorrichtung zumindest einen Sensor (Entfernungsmesser, Temperaturfühler, Lichtstärkemesser) aufweist.

FIG.1

- TEXT   - TEXT   -

1

4

FIG.2

EP 0 361 104 A2

FIG. 3

EP 0 361 104 A2